(19) **Europäisches Patentamt**

**European Patent Office**

**Office européen des brevets**

(11) **EP 1 400 800 A2**

(12) **EUROPEAN PATENT APPLICATION**

(43) Date of publication:
**24.03.2004 Bulletin 2004/13**

(51) Int Cl.7: **G01N 21/35**

(21) Application number: **03021234.4**

(22) Date of filing: **18.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **18.09.2002 JP 2002270917**

(71) Applicant: **Riken**
**Wako-shi, Saitama 351-0198 (JP)**

(72) Inventors:
• **Kawasa, Kodo**
**Wako-shi Saitama 351-0198 (JP)**
• **Ito, Hiromasa,**
**Riken Photodynamics Research Center**
**Sendai-shi Miyagi 980-0845 (JP)**
• **Minamide, Hiroaki,**
**Riken Photodynamics Resch. Ctr.**
**Sendai-shi Miyagi 980-0845 (JP)**

(74) Representative: **Grünecker, Kinkeldey,**
**Stockmair & Schwanhäusser Anwaltssozietät**
**Maximilianstrasse 58**
**80538 München (DE)**

(54) **Method and apparatus for differential imaging using terahertz wave**

(57)     THz waves 4 on two different wavelengths are generated within a frequency range of about 0.5 to 3 THz, and a subject matter 10 is irradiated with the THz waves on two wavelengths to measure their transmittances, and thus the presence of a target having wavelength dependence on the absorption of the THz wave is detected from a difference of their transmittances. Furthermore, a surface of the subject matter is scanned two-dimensionally with each of the THz waves on two different wavelengths, and an image of a position where the transmittances of the two wavelengths differ is displayed two-dimensionally.

FIG. 3

**Description**

BACKGROUND OF THE INVENTION

Technical Field of the Invention

The present invention relates to a differential imaging method and apparatus using a terahertz wave.

Description of the Related Art

A region of a far-infrared radiation or sub-millimeter wave having a frequency range of about 0.5 to 3 THz is positioned on a boundary between a light wave and an radio wave, and so its field has been left undeveloped both in technology and application in contrast to the light wave and the radio wave, which have been developed in their own fields. This region, however, has been more and more important, for instance, in effective utilization of a frequency band (about 0.5 to 3 THz) in wireless communications, accommodation of ultra-high communications, environmental measurement by use of imaging or tomography utilizing properties of an electromagnetic wave in such a frequency band, and application to biology and medicine. Hereinafter, a far-infrared radiation and a sub-millimeter wave in the frequency band (about 0.5 to 3 THz) are called "THz waves".

By the way, means of generating the THz wave is disclosed in [Nonpatent Literature 1] and [Nonpatent Literature 2].

[Nonpatent Literature 1]

Kodo Kawase, Hiromasa Ito, "Generation and application of a wavelength-variable THz electromagnetic wave by parametric oscillation", Laser Engineering, July, 1998.

[Nonpatent Literature 2]

Kodo Kawase, Hiromasa Ito, "Teraphotonics light source, possibilities of generation and application of a wavelength-variable THz wave", Applied Physics, vol. 71, no. 2, (2002).

One characteristic of the THz wave mentioned above is that it is a shortest wavelength band having material transmitting properties of the radiowave as well as a longest wavelength comprising straight moving properties of the light wave. More specifically, it can transmit through various materials as the radio wave, can obtain a highest spatial resolution in a radio wave band, and can be drawn around by a lens or mirror as the light wave.

Therefore, the THz wave is capable of transmitting through semiconductors, plastic, paper, rubber, vinyl, wood, fiber, ceramics, concrete, teeth, bone, fat, dried foods and the like, and is expected to be imaging means which is safe to humans and which will replace X-rays.

On the other hand, one kind of terrorist act is now a social problem in which anthrax bacteria or chemicals are distributed by mail. Conventional X-ray photographs allow shapes of these contents to be determined, but do not allow their properties to be determined unless unsealed. A problem of the X-ray photographs is therefore that no abnormalities can be detected in the case of, for example, powdered anthrax bacteria or chemicals.

SUMMARY OF THE INVENTION

The present invention has been developed to solve these problems. That is, an object of the present invention is to provide a differential imaging method and apparatus using a THz wave capable of detecting abnormalities of contents which can not be determined by conventional X-ray photographs.

According to the present invention, there is provided a differential imaging method using a THz wave comprising: generating THz waves (4) on two different wavelengths within a frequency range of about 0.5 to 3 THz; irradiating a subject matter (10) with the THz waves on two wavelengths to measure their transmittances; and detecting the presence of a target having wavelength dependence on the absorption of the THz wave from a difference of their transmittances.

Moreover, according to the present invention, there is provided a differential imaging apparatus using a THz wave comprising: a THz wave generation device (12) which generates THz waves (4) on two different wavelengths within a frequency range of about 0.5 to 3 THz; a transmission intensity measurement device (14) which irradiates a subject matter (10) with the THz waves (4) on two wavelengths to measure their transmittances; and a target detection device (16) which calculates transmittances from measured transmission intensity and detects the presence of a target having wavelength dependence on the absorption of the THz wave from a difference of their transmittances.

According to the method and apparatus of the present invention described above, the THz wave generation device (12) generates the THz waves (4) on two different wavelengths, and the transmission intensity measurement device (14) irradiates the subject matter (10) with the THz waves on two wavelengths to measure their transmission intensity, and then the target detection device (16) calculates transmittances from the measured transmission intensity and detects the presence of the target having wavelength dependence on the absorption of the THz wave from a difference of their transmittances, thereby making it possible to detect abnormalities of contents which can not be determined by conventional X-ray photographs.

According to a preferred embodiment of the present invention, there are provided a two-dimensional scanning device (18) which scans two-dimensionally a surface of the subject matter with each of the THz waves (4) on two different wavelengths; and an image display device (20) which displays two-dimensionally an image of a position where the transmittances of the two wavelengths differ, thereby scanning two-dimensionally the surface of the subject matter with each of the THz waves (4) on two different wavelengths, and displaying two-dimensionally the image of the position where the transmittances of the two wavelengths differ.

The method and apparatus make it possible to display two-dimensionally an image of a shape and distribution of the target with wavelength dependence existing in the subject matter (10).

The THz wave generation device (12) has a nonlinear optical crystal (1) which can generate a THz wave by a parametric effect; a pump light incidence apparatus (11) which allows a pump light (2) to be incident upon the nonlinear optical crystal to generate an idler light (3) and the THz wave (4); and a switching device (13) which switches the generated THz wave (4) to two different wavelengths.

With this configuration, the pump light incidence apparatus (11) is capable of allowing the pump light (2) to be incident upon the nonlinear optical crystal (1) to generate the idler light (3) and the THz wave (4). Moreover, the switching device (13) can switch the generated THz wave (4) to two different wavelengths for use in detection of the target having wavelength dependence.

The transmission intensity measurement device (14) comprises a splitter (14a) which splits the THz wave (4) into a measurement light (4a) and a reference light (4b) in a fixed ratio; a condensing lens (14b) which focuses the measurement light onto the subject matter (10) to apply the measurement light thereto; and an intensity measurement device (15) which measures intensity of the measurement light and reference light that have passed through the subject matter.

With this configuration, the splitter (14a) splits the THz wave (4) into the measurement light (4a) and the reference light (4b) in a fixed ratio, thereby making it possible to obtain an intensity I (= Ir/p ... Equation 1) of the THz wave (4) from an intensity Ir of the reference light (4b) and its ratio p.

Furthermore, the condensing lens (14b) focuses the measurement light onto the subject matter (10) to apply the measurement light thereto, thereby making it possible to measure transmittance at a specific position (condensing position) of the subject matter (10).

Furthermore, the intensity measurement device (15) measures the intensity of a measurement light Iout and a reference light Ir that have passed through the subject matter, so that an intensity Iin of the measurement light (4a) can be obtained by Iin = I - Ir (... Equation 2), and even when the THz wave (4) has an output variation, this output variation can be corrected to precisely obtain the transmittance of the subject matter by $\eta = (I_{in} - I_{out}) / I_{in}$ ( ... Equation 3) .

Other objects and advantageous features of the present invention will be apparent from the following description taken in conjunction with the accompanying drawings.

BRIEF DESCRIPTION OF THE DRAWINGS

FIG. 1 is a diagram showing a principle for generating a THz wave;
FIG. 2 is a configuration diagram of a THz wave generation device having an oscillator;
FIG. 3 is a diagram showing a first embodiment of a differential imaging apparatus according to the present invention;
FIG. 4 is another configuration diagram of the THz wave generation device;
FIG. 5 is a diagram showing a second embodiment of the differential imaging apparatus according to the present invention;
FIG. 6 is a graph showing a relationship between frequency and transmittance of the THz wave with regard to paper;
FIG. 7 is a graph showing a relationship between frequency and transmittance of the THz wave with regard to plastic;
FIG. 8 is a graph showing a relationship between frequency and transmittance of the THz wave with regard to salmon DNA;
FIG. 9 is a graph showing a relationship between frequency and transmittance of the THz wave with regard to albumin;
FIG. 10 is a graph showing a relationship between frequency and transmittance of the THz wave with regard to globulin;
FIG. 11 is a graph showing a relationship between frequency and transmittance of the THz wave with regard to cytochrome-c; and
FIGS. 12A and 12B show halftone images on a CRT by differential imaging according to the present invention.

DESCRIPTION OF THE PREFERRED EMBODIMENT

Preferred embodiments of the present invention will hereinafter be described with reference to the drawings. It is to be noted that in the drawings common parts are denoted with the same reference numerals to avoid redundant description.

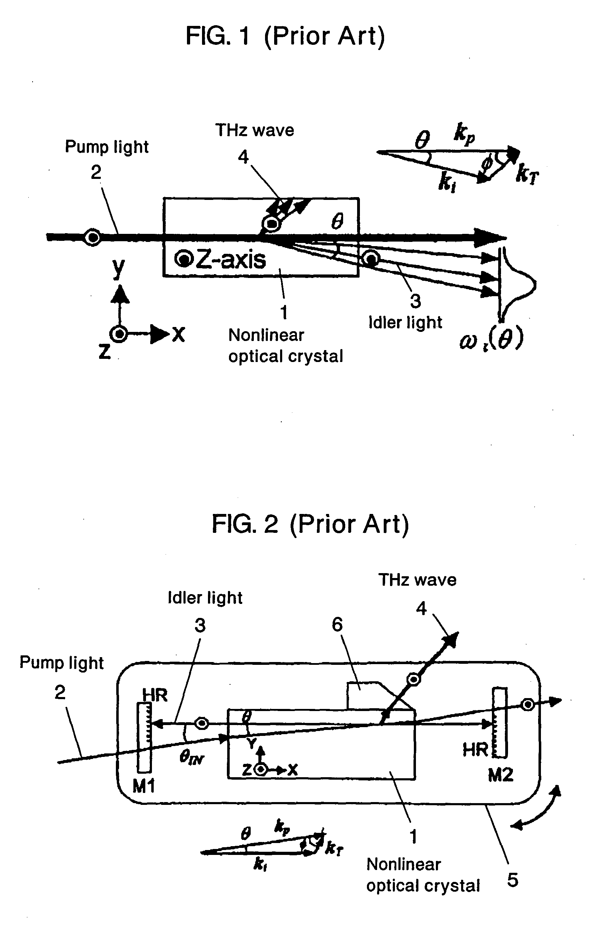

FIG. 1 is a diagram showing a principle for generating a THz wave. In this drawing, 1 denotes a nonlinear optical crystal (e.g., $LiNbO_3$), 2 denotes a pump light (e.g., YAG laser light), 3 denotes an idler light, and 4 denotes a THz wave.

When the pump light 2 is incident upon the nonlinear optical crystal 1 having Raman and far-infrared activities in a constant direction, a Stimulated Raman Scattering effect (or parametric interaction) generates the idler light 3 and THz wave 4 through an elementary excitation wave (polariton) of a material. In this case, an energy conservation law represented by Equation (4) and momentum conservation law (phase matching condition) represented by Equation (5) are established among the pump light 2 ($\omega_p$), THz wave 4 ($\omega_T$), and idler light 3 ($\omega_i$). It is.to be noted that Equation (5) represents a vector relationship and a non-collinear phase matching condition can be represented as shown in the upper right of FIG. 1.

$$\omega_p = \omega_T + \omega_i \qquad (4)$$

$$\kappa_p = \kappa_T + \kappa_i \qquad (5)$$

The idler light 3 and THz wave 4 generated at this time have a spatial spread and their wavelengths change continuously in accordance with their outgoing angles. The generation of the broad idler light and THz wave in this single-path arrangement is called THz-wave parametric generation (TPG).

It is to be noted that a basic optical parametric process is defined as annihilation of one pump photon and simultaneous generation of one idler photon and one signal photon. When the idler or signal light resonates and if the intensity of the pump light exceeds a constant threshold, parametric oscillation occurs. Moreover, the annihilation of one pump photon and simultaneous generation of one idler photon and one polariton are combined to constitute stimulated Raman scattering, which is included in parametric interaction in a broad sense.

However, problems lie in that the THz wave generated by a single-path arrangement THz wave generation device shown in FIG. 1 is very faint and its major part is absorbed in the nonlinear optical crystal while going through the latter by several hundreds of micrometers.

FIG. 2 is a configuration diagram of a THz wave generation device which solves the problems. As shown in this drawing, an oscillator can be constituted in a particular direction (angle θ) to the broad idler light 3 to increase the intensity of the idler light 3 in the particular direction. In this case, the oscillator comprises a mirror M1 and mirror M2 to which highly reflective coating is applied, and is set on a rotary stage 5, so that the angle of the oscillator can be finely adjusted. In addition, the highly reflective coating is applied to only halves of the two mirrors M1 and M2, and the pump light 2 directly passes through their remaining halves. It is to be noted that in this drawing 6 denotes a prism coupler for taking the THz wave 4 outside.

In the THz wave generation device shown in FIG. 2, if an incident angle θ of the pump light upon the crystal is changed within a certain range (e.g., 1 to 2°), an angle formed between the pump light and the idler light in the crystal changes, and an angle formed between the THz wave and the idler light also changes. Owing to the change in the phase matching condition, the THz wave comprises a continuous wavelength variability of about 140 to 310 μm, for example.

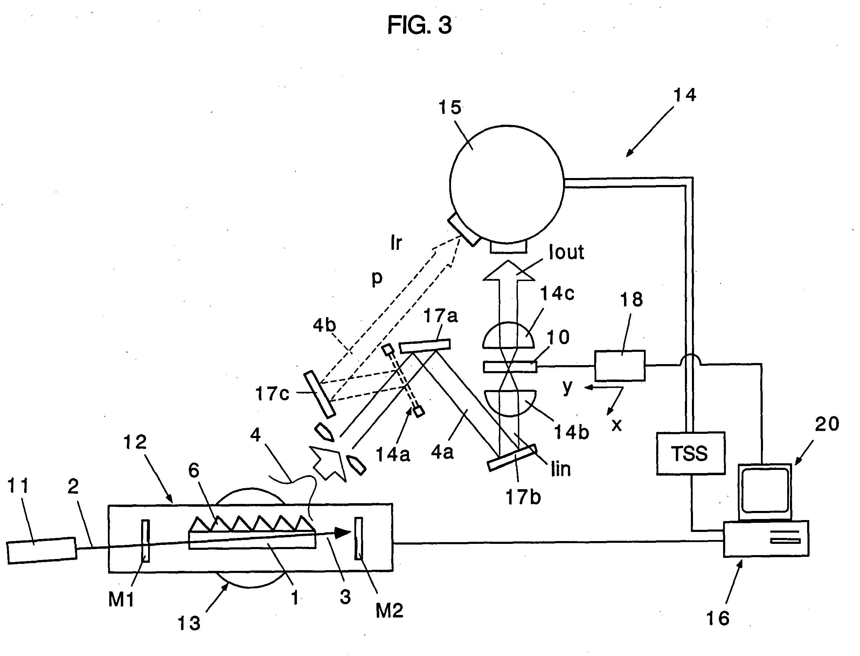

FIG. 3 is a diagram showing a first embodiment of a differential imaging apparatus according to the present invention. In this drawing, the differential imaging apparatus of the present invention comprises a THz wave generation device 12, a transmission intensity measurement device 14, a target detection device 16, a two-dimensional scanning device 18 and an image display device 20.

The THz wave generation device 12 has the nonlinear optical crystal 1 which can generate a THz wave by a parametric effect, a pump light incidence device 11 which allows the pump light 2 to be incident upon the nonlinear optical crystal 1 to generate the idler light 3 and the THz wave 4, and a switching device 13 which switches the generated THz wave 4 to two different wavelengths.

The THz wave generation device 12 is the THz wave generation device shown in FIG. 2 in this example. Moreover, in this example, the switching device 13 is the rotary stage wherein the stage on which the nonlinear optical crystal 1 and the mirrors M1 and M2 are mounted is inclined to predetermined two positions, so as to change the incident angle θ of the pump light upon the crystal.

The THz wave generation device 12 thus configured can generate the THz waves 4 on two different wavelengths within a frequency range of about 0.5 to 3 THz while optionally switching them with the switching device 13 (rotary stage).

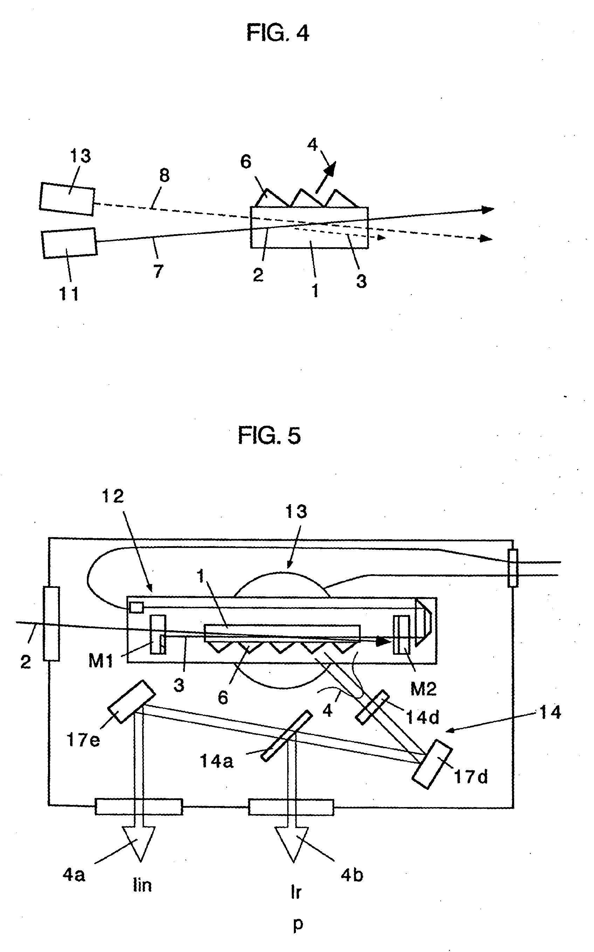

FIG. 4 is another configuration diagram of the THz wave generation device. In this example, the THz wave generation device 12 comprises a first laser device 11 which allows a single-frequency first laser light 7 to be incident as the pump light 2 upon the nonlinear optical crystal 1 capable of parametric oscillation, and a variable wavelength laser device 13 which injects another single-frequency second laser light 8 in a direction in which the idler light is generated by the pump light.

The THz wave generation device 12 thus configured can generate the THz waves 4 on two different wavelengths within a frequency range of about 0.5 to 3 THz while optionally switching them with the switching device 13 (variable wavelength laser device) without providing and rotating the rotary stage as in FIG. 3.

It is to be noted that the switching device 13 may be constituted using other means without being limited to the examples described above.

In FIG. 3, the transmission intensity measurement device 14 comprises a splitter 14a, a condensing lens 14b and an intensity measurement device 15.

The splitter 14a is a wire grid in this example, which splits the THz wave 4 into a measurement light 4a and a reference light 4b in a fixed ratio. The measurement light 4a is led to the condensing lens 14b via reflecting mirrors 17a and 17b, and the reference light 4b is led to the intensity measurement device 15 via a reflecting mirror 17c. The condensing lens 14b focuses the measurement light 4a onto a subject matter 10 to apply the measurement light 4a thereto, and the measurement light 4a which has transmitted through the subject matter 10 is led to the intensity measurement device 15 after its diameter is enlarged by a dispersion lens 14c. The condensing lens 14b and dispersion lens 14c are TPX lenses having a focal length of about 30 mm, for example. The intensity measurement device 15 is an Si porometer having two detection elements built-in, for example. An output of the intensity measurement device 15 is input to a target detection device 16.

The target detection device 16 is, for example, a PC comprising a storage device, and obtains an intensity I (= Ir/p ... Equation 1) of the THz wave 4 from an intensity Ir of the reference light 4b and its ratio p. It also obtains an intensity Iin of the measurement light 4a by Iin = I - Ir (... Equation 2) from intensities of a measurement light Iout and a reference light Ir which have passed through the subject matter 10, and thus obtains the transmittances through the subject matter by $\eta$ = (Iin - Iout) / Iin (... Equation 3). The target detection device 16 then stores the measured transmittances, and from their difference detects the presence of the target having wavelength dependence on the absorption of the THz wave.

It is to be noted that as apparent from Equations 1 to 3, even if the THz wave 4 has an output variation ($\Delta$I), the output variation ($\Delta$I) is automatically compensated by use of the reference light 4b, so that it is always possible to precisely obtain the transmittance through the subject matter 10 by correcting the output variation.

When the subject matter 10 is mail, it is known that paper, plastic, fiber and the like that are typical contents of mail have very low wavelength dependence on the absorption of the THz wave.

On the other hand, medicines such as aspirin, vitamin, stimulant and drug and biological powder such as anthrax and DNA have wavelength dependence on the absorption of the THz wave, and show different absorptivity against different wavelengths. The reason for this is not clear, but is considered to be an oscillation frequency derived from a molecular structure existing in the vicinity of a THz band.

Therefore, the target detection device 16 described above detects the presence of the target having wavelength dependence on the absorption of the THz wave from a difference of the measured transmittances, so that the target can be opened and checked in a safe device if it has wavelength dependence.

The two-dimensional scanning device 18 moves the subject matter 10, for example, in an x-y plane, and scans two-dimensionally a surface of the subject matter 10 with each of the THz waves 4 on two different wavelengths.

The image display device 20 displays two-dimensionally an image of a position where the transmittances of the two wavelengths differ which has been detected by the target detection device 16.

In a method of the present invention, the aforementioned differential imaging apparatus is used to generate the THz waves 4 on two different wavelengths within a frequency range of about 0.5 to 3 THz, to irradiate the subject matter 10 with the THz waves on two wavelengths for measurement of their transmittances, and to detect the presence of the target having wavelength dependence on the absorption of the THz wave from a difference of their transmittances.

Furthermore, the surface of the subject matter 10 is scanned two-dimensionally with each of the THz waves 4 on two different wavelengths, and an image of a position where the transmittances of the two wavelengths differ is displayed two-dimensionally.

FIG. 5 is a diagram showing a second embodiment of the differential imaging apparatus according to the present invention. In this drawing, the THz wave generation device 12 is the same as that in FIG. 3, and inclines the rotary stage 13 on which the nonlinear optical crystal 1 and the mirrors M1 and M2 are mounted to predetermined two positions, and changes the incident angle $\theta$ of the pump light upon the crystal, thereby generating the THz waves 4 on two different wavelengths within a frequency range of about 0.5 to 3 THz while switching them.

Furthermore, the transmission intensity measurement device 14 comprises the splitter 14a, a lens 14d, reflecting mirrors 17d, 17e and the intensity measurement device (not shown). The splitter 14a is a beam splitter in this example, which splits the THz wave 4 into the measurement light 4a and the reference light 4b in a fixed ratio. The measurement light 4a is applied to the subject matter 10, and the measurement light 4a which has transmitted through the subject matter 10 is led to the unshown intensity measurement device. The reference light 4b is also led to the intensity measurement device. The intensity measurement device is the Si porometer having two detection elements built-in, for example. The output of the intensity measurement device is input to the target detection device 16.

Others are configured in the same way as those in FIG. 3.

According to the method and apparatus of the present invention described above, the THz wave generation device 12 generates the THz waves 4 on two different wavelengths, the transmission intensity measurement device 14 irradiates the subject matter 10 with the THz waves on two wavelengths for measurement of their transmittances, and the target detection device 16 calculates transmittances from the measured transmission intensity and detects the presence of the target having wavelength dependence on the absorption of the THz wave from a difference of their transmittances, thereby making it possible to detect abnormalities of contents which can not be determined by conventional X-ray photographs.

[Embodiment]

An embodiment of the present invention will hereinafter be described.

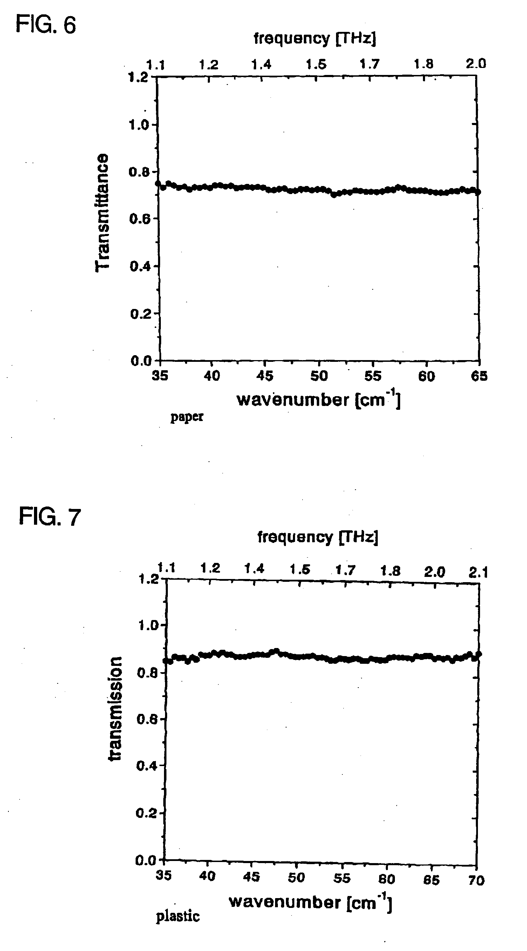

FIG. 6 and FIG. 7 are graphs showing relationships between frequency and transmittance of the THz wave with regard to paper and plastic. In these graphs, horizontal axes indicate a wavenumber (reciprocal number of a wavelength) and frequency of THz waves, and vertical axes indicate transmittance.

As shown in these graphs, when a sample is paper, plastic, fiber or the like that is a typical content of mail, transmittance shows an almost constant value.

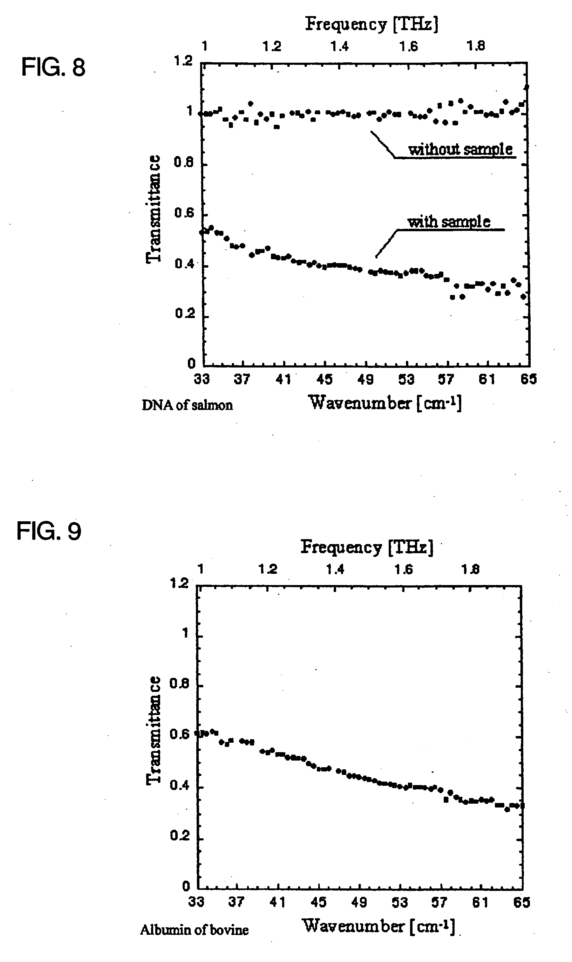

FIG. 8 is a graph showing a relationship between frequency and transmittance of the THz wave with regard to salmon DNA. In this graph, a horizontal axis indicates a wavenumber (reciprocal number of a wavelength) and frequency of THz waves, and a vertical axis indicates transmittance. Moreover, in this graph, upper measured data is a case without a sample, and lower one is a case with a sample (in this case, salmon DNA). An average value in the case without a sample is 1 regarding transmittance.

In FIG. 8, transmittance shows an almost constant value in the case of the upper measured data without a sample similarly to the case where when the sample is a typical content of mail such as paper, plastic or fiber (FIG. 6 and FIG. 7).

On the contrary, the lower measured data in FIG. 8 shows the transmittance tending to lower as the wavenumber (or frequency) increases. The reason for this is not obvious, but it is believed to be due to skeletal vibration.

Therefore, the above-described target detection device 16 can detect the salmon DNA as the target having wavelength dependence on the absorption of the THz wave from a difference of the transmittances measured with the THz waves on two different wavelengths.

FIG. 9 is a graph showing a relationship between a wavelength and transmittance of the THz wave with regard to albumin of a bovine. Albumin is a soluble protein, and is one of typical biological power samples.

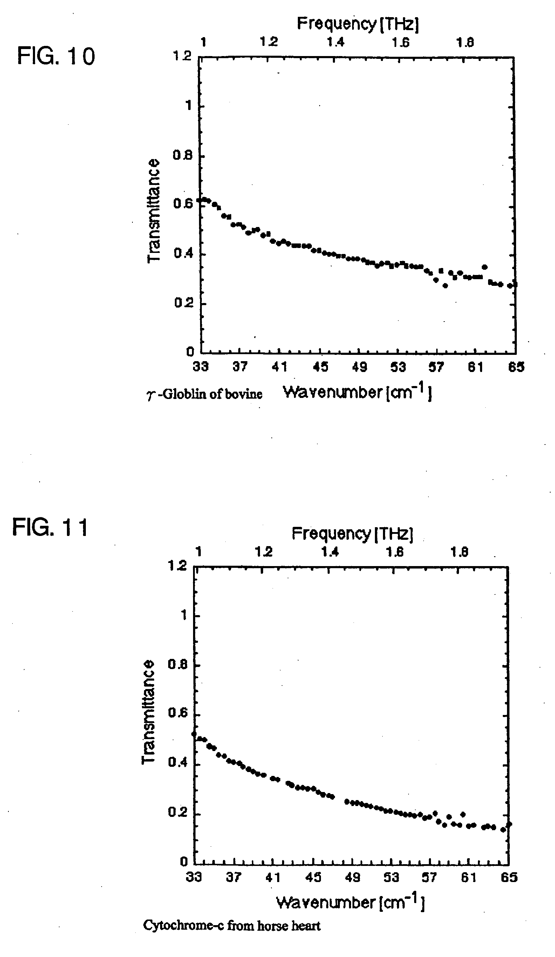

FIG. 10 is a graph showing a relationship between frequency and transmittance of the THz wave with regard to r-globulin of a bovine. Globulin is a protein component of hemoglobin, and is one of the typical biological power samples.

FIG. 11 is a graph showing a relationship between frequency and transmittance of the THz wave with regard to cytochrome-c from a horse heart. Cytochrome-c is also one of the typical biological power samples.

In FIGS. 9 to 11, each of measured data shows the transmittance tending to lower as the wavenumber (or frequency) increases, as in the salmon DNA in FIG. 8. Therefore, the above-described target detection device 16 can detect these biological power samples as the targets having wavelength dependence on the absorption of the THz wave from a difference of the transmittances measured with the THz wave on two different wavelengths.

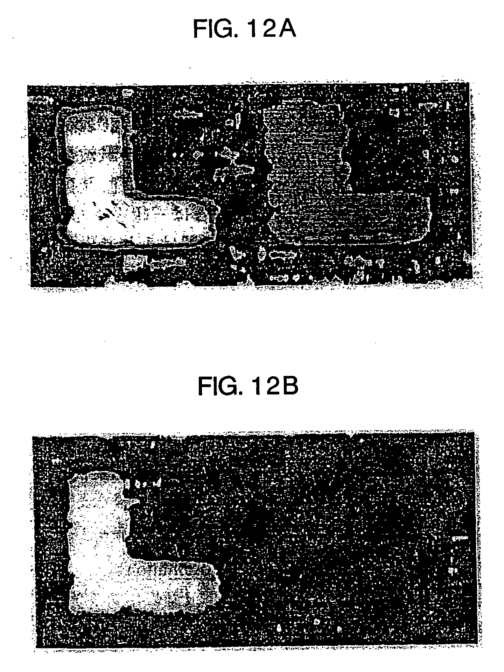

FIGS. 12A and 12B show halftone images on a CRT by differential imaging according to the present invention. In this example, the target (Ni mesh having a grid interval of 65 μm in this example) having wavelength dependence on the absorption of the THz wave and copy paper with no wavelength dependence are cut into an L-shape and sandwiched by a cover, and then irradiated with the THz waves so as to display images of transmittance two-dimensionally.

FIG. 12A shows transmittance distribution of the THz wave having a wavelength of 180 μm. A white part is where transmittance is low in this drawing, and it is appreciated that the L shape of the target having wavelength dependence (left) is displayed in vivid white, and that the L shape of the copy paper with no wavelength dependence (right) is also thinly displayed.

Furthermore, FIG. 12B shows distribution of transmittances different between the THz waves having a wavelength of 180 μm and a wavelength of 220 μm. In this drawing, the L shape of the target having wavelength dependence (left) is still displayed in vivid white because of a great difference in the transmittances of the two wavelengths. On the contrary, it is found that the copy paper with no wavelength dependence (right) has almost no difference in the transmittances of the two wavelengths, resulting in the L shape disappeared and not displayed at all.

It is therefore possible not only to simply detect the presence of the target with wavelength dependence existing in the above-described subject matter 10 but also to display an image of its shape and distribution two-dimensionally.

As described above, the differential imaging method and apparatus using the THz wave according to the present invention have a beneficial advantage of, for example, being capable of detecting the target having wavelength dependence on the absorption of the THz wave, among those contents which can not be determined by conventional X-ray photographs.

It is to be noted that the present invention is not limited to the above-described embodiment and can of course be variously changed in a range without departing from the spirit of the present invention.

**Claims**

1. A differential imaging method using a THz wave comprising: generating THz waves (4) on two different wavelengths within a frequency range of about 0.5 to 3 THz; irradiating a subject matter (10) with the THz waves on two wavelengths to measure their transmittances; and detecting the presence of a target having wavelength dependence on the absorption of the THz wave from a difference of their transmittances.

2. The differential imaging method according to claim 1, comprising: scanning two-dimensionally a surface of the subject matter with each of the THz waves (4) on two different wavelengths; and displaying two-dimensionally an image of a position where the transmittances of the two wavelengths differ.

3. A differential imaging apparatus using a THz wave comprising: a THz wave generation device (12) which generates THz waves (4) on two different wavelengths within a frequency range of about 0.5 to 3 THz; a transmission intensity measurement device (14) which irradiates a subject matter (10) with the THz waves (4) on two wavelengths to measure their transmittances; and a target detection device (16) which calculates transmittances from measured transmission intensity and detects the presence of a target having wavelength dependence on the absorption of the THz wave from a difference of their transmittances.

4. The differential imaging apparatus according to claim 3, comprising: a two-dimensional scanning device (18) which scans two-dimensionally a surface of the subject matter with each of the THz waves (4) on two different wavelengths; and an image display device (20) which displays two-dimensionally an image of a position where the transmittances of the two wavelengths differ.

5. The differential imaging apparatus according to claim 3, wherein the THz wave generation device (12) has a nonlinear optical crystal (1) which can generate a THz wave by a parametric effect; a pump light incidence apparatus (11) which allows a pump light (2) to be incident upon the nonlinear optical crystal to generate an idler light (3) and the THz wave (4); and a switching device (13) which switches the generated THz wave (4) to two different wavelengths.

6. The differential imaging apparatus according to claim 3, wherein the transmission intensity measurement device (14) comprises a splitter (14a) which splits the THz wave (4) into a measurement light (4a) and a reference light (4b) in a fixed ratio; a condensing lens (14b) which focuses the measurement light onto the subject matter (10) to apply the measurement light thereto; and an intensity measurement device (15) which measures intensity of the measurement light and reference light that have passed through the subject matter.

# FIG. 1 (Prior Art)

Pump light
2

THz wave
4

$k_p$
$\theta$
$\phi$
$k_T$
$k_i$

$\theta$

Z-axis

y

x

z

3
Idler light

1
Nonlinear
optical crystal

$\omega_i(\theta)$

# FIG. 2 (Prior Art)

Idler light
3

THz wave
4

6

Pump light
2

HR

$\theta$

$\theta_{IN}$

Y

Z   X

HR

M1

M2

$\theta$
$k_p$
$k_T$
$k_i$

1
Nonlinear
optical crystal

5

FIG. 3

# FIG. 4

# FIG. 5

FIG. 6

paper

FIG. 7

plastic

FIG. 8

Frequency [THz]

Transmittance

without sample

with sample

DNA of salmon

Wavenumber [cm⁻¹]

FIG. 9

Frequency [THz]

Transmittance

Albumin of bovine

Wavenumber [cm⁻¹]

FIG. 10

γ-Globlin of bovine

FIG. 11

Cytochrome-c from horse heart

FIG. 12A

FIG. 12B